# EUROPÄISCHE PATENTSCHRIFT

(11) **EP 3 942 265 B1**
(45) Veröffentlichungstag und Bekanntmachung des Hinweises auf die Patenterteilung: **22.04.2026**
(21) Anmeldenummer: 20726113.2
(22) Anmeldetag: 15.05.2020
(51) Int. Cl.: G01J 5/00

(54) **KALIBRIERUNGSANORDNUNG UND ENTSPRECHENDES KALIBRIERUNGSVERFAHREN**
CALIBRATION ASSEMBLY AND CORRESPONDING CALIBRATION METHOD
AGENCEMENT D'ÉTALONNAGE ET PROCÉDÉ D'ÉTALONNAGE CORRESPONDANT

(30) Priorität: 24.05.2019 DE 102019207663
(43) Veröffentlichungstag der Anmeldung: 26.01.2022
(73) Patentinhaber: ERS electronic GmbH, 82110 Germering (DE)
(72) Erfinder: REITINGER, Klemens, 82110 Germering (DE)
(74) Vertreter: Isarpatent
(86) Internationale Anmeldenummer: PCT/EP2020/063622
(87) Internationale Veröffentlichungsnummer: WO 2020/239474

(56) Entgegenhaltungen:
- WO-A1-2015/123057
- WO-A1-2018/169765
- US-A1- 2012 201 267
- US-A1- 2017 372 928

## Beschreibung

Die vorliegende Erfindung betrifft eine Kalibrierungsanordnung und ein entsprechendes Kalibrierungsverfahren zum Kalibrieren einer Infrarot-Kameravorrichtung zum Erfassen einer Temperatur eines durch eine Temperaturregeleinrichtung beheizbaren Chucks für Wafersubstrate.

Die US 2012/0201267 A1 beschreibt eine Kalibrierungsanordnung zum Kalbrieren eines Pyrometers zum Erfassen einer Temperatur eines durch eine Temperaturregelungseinrichtung beheizbaren Chucks für Wafersubstrate, der in einer Abscheidekammer angeordnet ist. Dazu vorgesehen ist ein Sondenwafer mit einer Mehrzahl von Temperatursonden. Die Abscheidekammer ist durch eine obere Abdeckplatte und eine untere Abdeckplatte verschlossen, wobei die obere Abdeckplatte für eine vom durch den Chuck beheizbaren Sondenwafer abgegebene und von dem Pyrometer zu erfassende Infrarotstrahlung optisch durchlässig ist. Eine Temperaturerfassungseinrichtung erfasst die jeweiligen Temperaturen der Temperatursonden und leitet diese einer Kalibrierungseinrichtung zum Kalibrieren des Pyrometers zu.

Ähnliche Vorrichtungen sind aus der WO 2015/123057 A1 und der US 2017/372928 A1 bekannt.

Die DE 69 730 639 T2 beschreibt ein Verfahren und eine Vorrichtung zur Kalibrierung eines Infrarot-Pyrometers in einer Wärmebehandlungsanlage.

Üblicherweise werden beheizbare Chucks (Aufspannvorrichtungen für Wafersubstrate) vor ihrer Inbetriebnahme sowie in regelmäßigen Zyklen während des Betriebs kalibriert, um die beim Testen von Schaltungselementen auf den Wafersubstraten erforderliche Temperaturgenauigkeit zu erzielen. Weiterhin ist es erwünscht, die eingestellte Temperatur an möglichst jedem Ort auf dem Chuck und somit auf den zu testenden Wafersubstraten zu kennen.

Es ist möglich, zum Kalibrieren einen sogenannten Testwafer bzw. Sondenwafer zu verwenden, welcher eine Mehrzahl von Temperatursonden, beispielsweise Pt-Widerständen, aufweist. Derartige Pt-Widerstände sind in präzise vorkalibrierter Form verfügbar. Allerding sind derartige Testwafer bzw. Sondenwafer sehr kostspielig.

Weiterhin ist es möglich, zum Kalibrieren des Chucks eine Infrarot-Kameravorrichtung zu verwenden, welche allerdings große Toleranzen aufweist und schwer kalibrierbar ist. Die Infrarot-Kameravorrichtung kann beispielsweise mittels des oben beschriebenen Testwafers bzw. Sondenwafers vorkalibriert werden.

Allerdings hat sich herausgestellt, dass insbesondere bei höheren Temperaturen Luftströmungen bzw. Gasströmungen eines verwendeten Spülgases ein gemessenes Temperaturprofil an der Oberfläche des Sondenwafers verfälschen, was darin resultiert, dass nicht die Temperaturverteilung an der Oberfläche des Sondenwafers erfasst wird, sondern eine Temperaturverteilung der dort herrschenden Strömung, beispielsweise einer Konvektionsströmung bei höheren Temperaturen, insbesondere oberhalb von 100°C, oder die Beeinflussung der Temperaturverteilung durch diese Strömung.

Die vorliegende Erfindung schafft eine Kalibrierungsanordnung nach Anspruch 1 und entsprechendes Kalibrierungsverfahren nach Anspruch 14.

Bevorzugte Weiterbildungen sind Gegenstand der jeweiligen abhängigen Ansprüche.

Die der vorliegenden Erfindung zugrunde liegende Idee liegt darin, dass bei einer Kalibrierung einer Infrarot-Kameravorrichtung zwischen dem Sondenwafer und der Infrarot-Kameravorrichtung eine durch einen Spalt um einen Spaltabstand von dem Sonderwafer beabstandet gehalterte Strömungsabschirmplatte verwendet wird, welche für eine vom durch den Chuck beheizten Sondenwafer abgegebenen und von der Infrarot-Kameravorrichtung zu erfassenden Infrarotstrahlung optisch durchlässig ist.

Bei geeigneter Auswahl der Strömungsabschirmplatte bzw. deren Konturen sowie bei geeignetem Spaltabstand lässt sich zwischen dem Sondenwafer und der Strömungsabschirmplatte der sogenannte Thermoskanneneffekt erzielen, was bedeutet, dass die besagten Strömungen sich nicht oberhalb der Oberfläche des Sondenwafers einstellen können. Somit ermöglicht die vorliegende Erfindung eine präzise Kalibrierung der Infrarot-Kameravorrichtung.

Erfindungsgemäß liegt der Spaltabstand des Spaltes im Bereich 1 mm bis 10 mm, insbesondere 4 mm bis 6 mm. So lässt sich der gewünschte Thermoskanneneffekt besonders stabil erreichen.

Gemäß einer weiteren bevorzugten Ausführungsform ist die Strömungsabschirmplatte durch eine Halterungseinrichtung gehaltert, durch welche der Spaltabstand des Spaltes variabel einstellbar ist. Dies erhöht die Flexibilität.

Gemäß einer weiteren bevorzugten Ausführungsform ist die Strömungsabschirmplatte durch eine vorzugsweise thermisch isolierende Abstandshaltereinrichtung gehaltert, welche eine Mehrzahl von Stützelementen aufweist, die sich vom Sondenwafer zur Strömungsabschirmplatte erstrecken. Dies vereinfacht den Aufbau der Anordnung.

Gemäß einer weiteren bevorzugten Ausführungsform ist die Mehrzahl von Stützelementen in den Sondenwafer und/oder in die Strömungsabschirmplatte integriert. Dies erspart eine separate Halterung.

Gemäß einer weiteren bevorzugten Ausführungsform ist die Kalibrierungseinrichtung mit der Temperaturregeleinrichtung verbunden und derart gestaltet, dass sie basierend auf den erfassten jeweiligen Temperaturen der Temperatursonden die Temperaturregeleinrichtung kalibrieren kann. So können sich zwei Kalibrierungsprozeduren simultan durchführen.

Gemäß einer weiteren bevorzugten Ausführungsform weist der Sondenwafer eine schwarze Oberfläche auf und ist insbesondere ein schwarzer Kunststoffwafer oder ein schwarzer Halbleiterwafer. So lassen sich störende Reflexionen von IR-Strahlung verhindern.

Gemäß einer weiteren bevorzugten Ausführungsform ist die Strömungsabschirmplatte eine Glasplatte oder eine Halbleiterplatte oder eine Keramikplatte. Derartige Strömungsabschirmplatten lassen sich hinsichtlich der gewünschten IR-Transparenz leicht optimieren.

Gemäß einer weiteren bevorzugten Ausführungsform weist die Infrarot-Kameravorrichtung eine Speichereinrichtung auf, in der durch die Kalibrierungseinrichtung Kalibrierungswerte basierend auf den erfassten jeweiligen Temperaturen der Temperatursonden speicherbar sind. Dies ermöglicht eine zukünftige Wiederholung der Kalibrierung, falls erforderlich.

Gemäß einer weiteren bevorzugten Ausführungsform sind die Temperatursonden in den Sondenwafer integriert. So lässt sich das Temperaturprofil besonders störungsfrei erfassen.

Gemäß einer weiteren bevorzugten Ausführungsformsind die Temperatursonden Pt-Widerstände, insbesondere Pt1000- oder Pt100-Widerstände. Derartige Widerstände sind mit hoher Vorkalibrierungsgenauigkeit verfügbar.

Gemäß einer weiteren bevorzugten Ausführungsform ist die Kalibrierungseinrichtung derart gestaltet, dass sie beim Kalibrieren der Infrarot-Kameravorrichtung einen optischen Brechungsindex der Strömungsabschirmplatte berücksichtigt. So lassen sich die IR-Bildpunkte noch genauer entsprechenden Punkten auf der Chuckoberfläche zuordnen.

Gemäß einer weiteren bevorzugten Ausführungsform ist der optische Brechungsindex der Strömungsabschirmplatte in die Kalibrierungseinrichtung eingebbar. Dies ermöglicht die Verwendung von Strömungsabschirmplatten mit unterschiedlichem Brechungsindex.

Gemäß einer weiteren bevorzugten Ausführungsform weist die Infrarot-Kameravorrichtung ein wesentlich kleineres Abtastraster als die Temperatursonden auf, wobei die Kalibrierungseinrichtung derart gestaltet ist, dass sie Kalibrierungswerte, die neben den Temperatursonden liegen, gemäß einem vorgegebenen Extrapolations- und/oder Interpolationsalgorithmus festlegt.

Ausführungsbeispiele der Erfindung sind in den Zeichnungen dargestellt und in der nachfolgenden Beschreibung näher erläutert.

Es zeigen:
- Fig. 1: eine Kalibrierungsanordnung gemäß einer ersten Ausführungsform der vorliegenden Erfindung;
- Fig. 2: eine Verwendung einer mit der Kalibrierungsanordnung gemäß einer ersten Ausführungsform der vorliegenden Erfindung kalibrierten Infrarot-Kameravorrichtung zum Kalibrieren der Temperaturregeleinrichtung des Chucks,
- Fig. 3: eine Kalibrierungsanordnung gemäß einer zweiten Ausführungsform der vorliegenden Erfindung; und
- Fig. 4: ein Kalibrierungsverfahren gemäß einer dritten Ausführungsform der vorliegenden Erfindung.

In den Figuren bezeichnen gleiche Bezugszeichen gleiche oder funktionsgleiche Bestandteile.

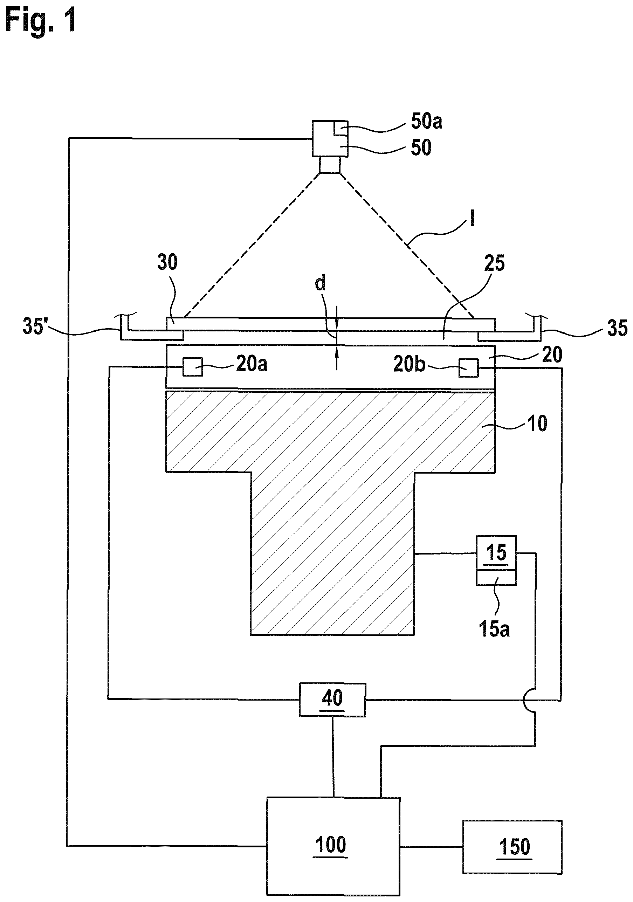

Fig. 1 zeigt eine Kalibrierungsanordnung gemäß einer ersten Ausführungsform der vorliegenden Erfindung.

In Fig. 1 bezeichnet Bezugszeichen 10 einen durch eine Temperaturregeleinrichtung 15 beheizbaren Chuck für Wafersubstrate. Selbstverständlich kann der Chuck 10 auch durch eine (nicht gezeigte) Kühleinrichtung kühlbar sein, wobei sich durch gleichzeitiges Heizen und Kühlen ein jeweiliges Temperaturgleichgewicht einfach einstellen lässt. Typischerweise können derartige Chucks in einem Temperaturbereich von -65°C bis 400°C arbeiten.

Die Temperaturregeleinrichtung 15 weist eine Speichereinrichtung 15a auf, in der die für die jeweiligen einstellbaren Solltemperaturen anzuwendenden Regelparameter, z.B. Heizströme, gespeichert sind.

Auf der Oberfläche des Chucks 10 aufliegend angeordnet ist ein Sondenwafer 20, welcher eine Mehrzahl von Temperatursonden 20a, 20b aufweist, die üblicherweise gleichmäßig im Innern des Sondenwafers eingebettet sind, beispielsweise in Form von Pt100- bzw. Pt1000-Widerständen. Der Sondenwafer 20 ist zweckmäßigerweise ein schwarzer Wafer, insbesondere ein schwarzer Halbleiterwafer oder ein schwarzer Kunststoffwafer, um störende IR-Reflexionen beim Kalibrieren zu vermeiden.

Bezugszeichen 50 bezeichnet eine Infrarot-Kameravorrichtung mit einer Bildauflösung von typischerweise 10.000 bis 50.000 Pixeln, welche auf die Oberseite des Sondenwafers 20 gerichtet ist. Die Infrarot-Kameravorrichtung 50 enthält eine Speichervorrichtung 50a, in der jeweilige Temperaturwerte abgespeichert sind, die entsprechenden Intensitätswerten der von der Infrarot-Kameravorrichtung 50 zu erfassenden Infrarotstrahlung I entsprechen.

Zwischen dem Sondenwafer 20 und der Infrarot-Kameravorrichtung 50 durch einen Spalt 25 um einen Spaltabstand d beabstandet gehaltert ist eine Strömungsabschirmplatte 30, welche für eine vom durch den Chuck 10 beheizten Sondenwafer 20 abgegebenen und von der Infrarot-Kameravorrichtung 50 zu erfassende Infrarotstrahlung I optisch durchlässig ist.

Eine derartige Strömungsabschirmplatte 30 ist beispielsweise eine Glasplatte oder eine Halbleiterplatte oder eine Keramikplatte mit entsprechenden Infrarot-Transmissionseigenschaften. Eine Halterungseinrichtung 35 haltert die Strömungsabschirmplatte 30 in dem vorgegebenen Spaltabstand d zur Oberfläche des Sondenwafers 20. Vorzugsweise ist der Spaltabstand d des Spaltes mittels der Halterungseinrichtung 35 variabel einstellbar. Maßgeblich für den beim Kalibrieren zu wählenden Spaltabstand d ist die erwünschte Erzielung des Thermoskanneneffektes, sodass sich keine Strömung zwischen dem Sondenwafer 20 und der Strömungsabschirmplatte 30 ausbilden kann, welche das Kalibrierungsergebnis verfälschen könnte.

Der zur Erzielung des Thermoskanneneffektes erforderliche Spaltabstand d kann je nach Ausgestaltung der Konturen der Strömungsabschirmplatte bzw. deren Umgebung variieren und liegt bei Verwendung der dargestellten ebenen Strömungsabschirmplatte 3 in einem Bereich von 1 mm bis 10 mm, insbesondere von 4 mm bis 6 mm.

Eine Temperaturerfassungseinrichtung 40 ist mit den Temperatursonden 20a, 20b verbunden und kann deren jeweilige Temperaturen erfassen, beispielsweise mittels der Zweidraht- oder Vierdraht-Methode.

Die Temperaturerfassungseinrichtung 40 ist mit einer Kalibrierungseinrichtung 100 verbunden, welcher die erfassten jeweiligen Temperaturen der Temperatursonden 20a, 20b somit zuführbar sind.

Basierend auf den erfassten jeweiligen Temperaturen der Temperatursonden 20a, 20b kann die Kalibrierungseinrichtung 100 die Infrarot-Kameravorrichtung 50 kalibrieren, indem sie die in der Speichereinrichtung 50a gespeicherten Kalibrierungswerte für die jeweiligen Temperaturen bzw. Infrarotstrahlungsintensitäten verifiziert bzw. modifiziert.

Bezugszeichen 150 bezeichnet eine optionale Displayvorrichtung, mittels der das Temperaturprofil auf dem Sondenwafer 20 bei den jeweiligen Kalibrierungstemperaturen darstellbar ist.

Bei der ersten Ausführungsform ist die Kalibrierungseinrichtung 100 zusätzlich mit der Temperaturregeleinrichtung 15 verbunden und kann basierend auf den erfassten jeweiligen Temperaturen der Temperatursonden 20a, 20b die Temperaturregeleinrichtung 15 kalibrieren. Dies geschieht beispielsweise dadurch, dass bei einer Abweichung zwischen der in der Temperaturregeleinrichtung 20 eingestellten Solltemperatur und der tatsächlich erfassten Temperatur des Sondenwafers 20 die Sollwerte für die entsprechenden Regelparameter, z.B. Heizströme, in der Speichereinrichtung 15a modifiziert werden. Hierzu kann beispielsweise die mittlere Temperatur der Temperatursonden 20a, 20b herangezogen werden.

Nachdem die Infrarot-Kameravorrichtung 50 ein üblicherweise wesentlich kleineres Abtastraster als die Temperatursonden 20a, 20b aufweist, kann die Kalibrierungseinrichtung 100 derart gestaltet sein, dass sie Kalibrierungswerte, die neben den Temperatursonden 20b, 20b liegen, gemäß einem vorgegebenen Extrapolations- und/oder Interpolationsalgorithmus festlegt.

Weiterhin ist es möglich, dass die Kalibrierungseinrichtung 100 einen Algorithmus enthält, der beim Kalibrieren der Infrarot-Kameravorrichtung 50 einen optischen Infrarot-Brechungsindex der Strömungsabschirmplatte 30 berücksichtigt.

Optional kann der optische Infrarot-Brechungsindex der Strömungsabschirmplatte 30 in die Kalibrierungseinrichtung 100 eingebbar sein, was die Verwendung von Strömungsabschirmplatten mit unterschiedlichem optischen Infrarot-Brechungsindex ermöglicht.

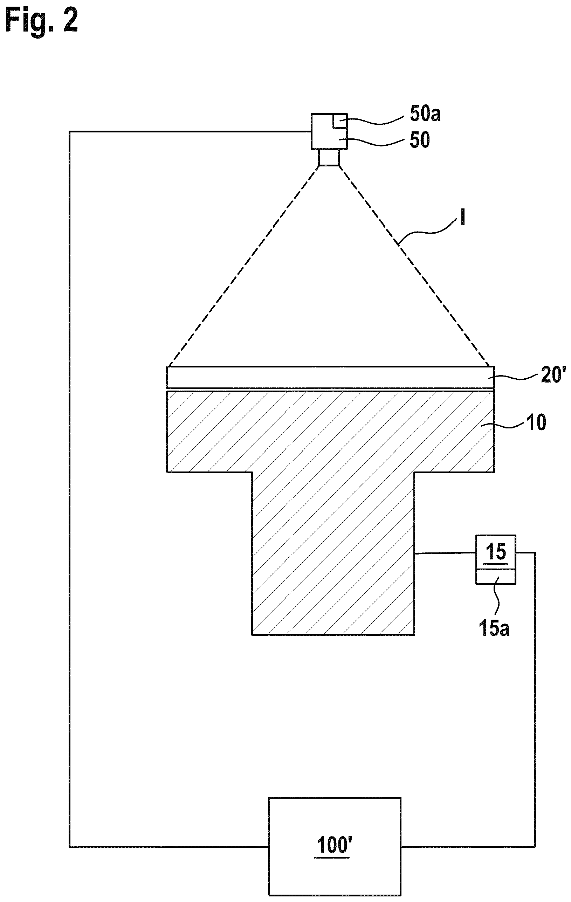

Fig. 2 zeigt eine Verwendung einer mit der Kalibrierungsanordnung gemäß einer ersten Ausführungsform der vorliegenden Erfindung kalibrierten Infrarot-Kameravorrichtung zum Kalibrieren der Temperaturregeleinrichtung des Chucks.

Fig. 2 zeigt, dass auf den Chuck 10 der ersten Ausführungsform ein Abdeckwafer 20' aufgelegt ist, der eine schwarze Oberfläche aufweist, insbesondere ein schwarzer Kunststoffwafer oder ein schwarzer Halbleiterwafer. Die Infrarot-Kameravorrichtung 50, welche mittels der Anordnung gemäß Fig. 1 kalibriert worden ist, ist mit einer Steuereinrichtung 100' verbunden, die wiederum mit der Temperaturregeleinrichtung 15 des Chucks 10 verbunden ist.

Durch diesen Aufbau unter Verwendung der Infrarot-Kameravorrichtung 50 lässt sich über die Steuereinrichtung 100' die Temperaturregeleinrichtung 15 des beheizbaren Chucks 10 kalibrieren bzw. nachkalibrieren, indem, wie oben beschrieben, bei Abweichungen zwischen Solltemperatur und de von der Infrarot-Kameravorrichtung 50 erfassten Ist-Temperatur die in der Speichereinrichtung 15a abgelegten Regelparameter, z.B. Heizströme, modifiziert werden. Dies kann beispielsweise in einem iterativen Prozess vollzogen werden, bis die an der Temperaturregeleinrichtung 15 eingestellte Solltemperatur der durch die Infrarot-Kameravorrichtung 50 erfassten Ist-Temperatur (beispielsweise mittlere Temperatur) entspricht.

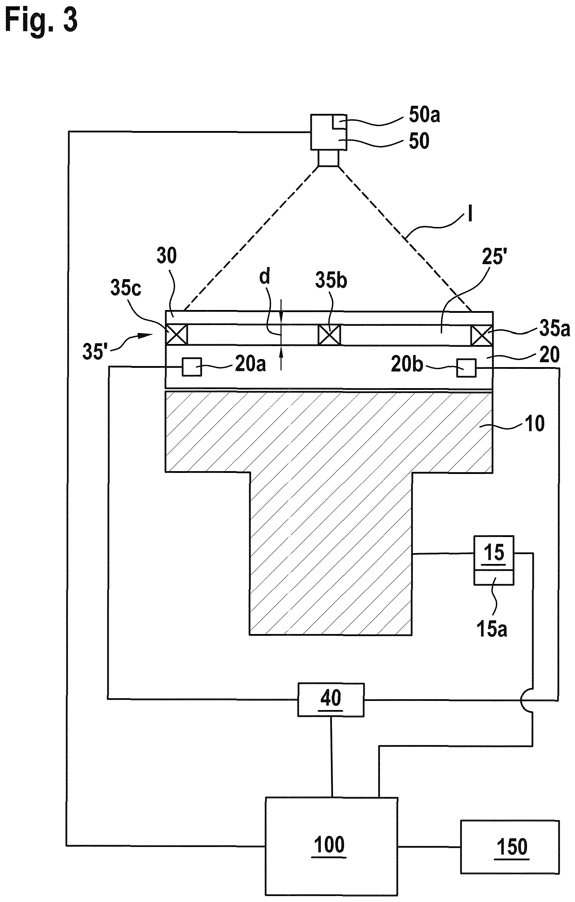

Fig. 3 zeigt eine Kalibrierungsanordnung gemäß einer zweiten Ausführungsform der vorliegenden Erfindung.

Der Aufbau der zweiten Ausführungsform entspricht grundsätzlich dem Aufbau der oben beschriebenen ersten Ausführungsform, wobei anstelle der Halterungseinrichtung 35 gemäß Fig. 1 zwischen dem Sondenwafer 20 und der Strömungsabschirmplatte 30 eine vorzugsweise thermisch isolierende Abstandshaltereinrichtung 35' vorgesehen ist, welche die Strömungsabschirmplatte 30 haltert. Im vorliegenden Beispiel weist die Abstandshaltereinrichtung 35' eine Mehrzahl von Stützelementen 35a, 35b, 35c auf, die sich vom Sondenwafer 20 zur Strömungsabschirmplatte 30 erstrecken.

In einer weiteren (nicht dargestellten) Ausführungsform können diese Stützelemente 35a, 35b, 35c in den Sondenwafer 20 und/oder in die Strömungsabschirmplatte 30 integriert sein. Dies lässt sich besonders einfach realisieren, wenn der Sondenwafer 20 ein schwarzer Kunststoffwafer ist, welcher in einem Moldverfahren hergestellt wird.

Eine derartige Anordnung lässt sich besonders kompakt realisieren.

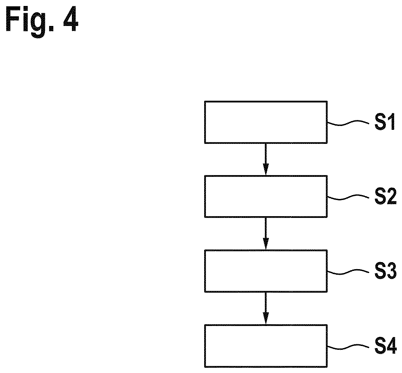

Fig. 4 zeigt ein Kalibrierungsverfahren gemäß einer dritten Ausführungsform der vorliegenden Erfindung.

In Fig. 4 sind die Verfahrensschritte angegeben, welche mittels der Kalibrierungsanordnung gemäß der ersten bzw. zweiten Ausführungsform grundlegend durchführbar sind. In einem ersten Schritt S1 erfolgt ein Anordnen von dem Sondenwafer 20 auf dem Chuck 10, welcher die Mehrzahl von Temperatursonden 20A, 20B aufweist.

Weiter im Schritt S2 erfolgt das Haltern der Strömungsabschirmplatte 30 zwischen dem Sondenwafer 20 und der Infrarot-Kameravorrichtung 50 durch einen Spalt 25 um den Spaltabstand d beabstandet. Wie bereits erläutert, ist die Strömungsabschirmplatte 30 für eine von durch den Chuck 10 beheizten Sondenwafer 20 abgegebenen und von der Infrarot-Kameravorrichtung 50 zu erfassenden Infrarotstrahlung optisch durchlässig. Mittels der Temperatursonden 20a, 20b erfolgt im Schritt S3 ein Erfassen der jeweiligen Temperaturen, welche sich aufgrund der an der Temperaturregelungseinrichtung 15 eingestellten Sollwerte ergeben.

Schließlich im Schritt S4 erfolgt das Kalibrieren der Infrarot-Kameravorrichtung 50 basierend auf den erfassten jeweiligen Temperaturen der Temperatursonden 20a, 20b. Bei weiteren (nicht dargestellten) Ausführungsformen des erfindungsgemäßen Kalibrierungsverfahrens können selbstverständlich sämtliche oben beschriebenen Funktionalitäten der Kalibrierungsanordnung in Form entsprechender Verfahrensschritte implementiert werden.

Obwohl die vorliegende Erfindung vorstehend anhand bevorzugter Ausführungsformen erläutert wurde, ist sie nicht darauf beschränkt, sondern in vielfältiger Weise modfizierbar, so lange sie unter den Gegenstand der Ansprüche fällt, die die Erfindung definieren.

## Patentansprüche

1. Kalibrierungsanordnung zum Kalibrieren einer Infrarot-Kameravorrichtung (50) zum Erfassen einer Temperatur eines durch eine Temperaturregeleinrichtung (15) beheizbaren Chucks (10) zum Testen von Wafersubstraten mit:
der Temperaturregeleinrichtung (15);
dem durch die Temperaturregeleinrichtung (15) beheizbaren Chuck (10) für Wafersubstrate;
einem auf dem Chuck (10) angeordneten Sondenwafer (20), welcher eine Mehrzahl von Temperatursonden (20a, 20b) aufweist;
der Infrarot-Kameravorrichtung (50), welche auf die Oberseite des Sondenwafers (20) gerichtet ist;
einer zwischen dem Sondenwafer (20) und der Infrarot-Kameravorrichtung (50) beabstandet gehalterten Strömungsabschirmplatte (30), welche durch einen Spalt (25) mit einen Spaltabstand (d) von dem Sondenwafer (20) beabstandet ist und welche für eine vom durch den Chuck (10) beheizten Sondenwafer (20) abgegebenen und von der Infrarot-Kameravorrichtung (50) zu erfassenden Infrarotstrahlung optisch durchlässig ist;
einer Temperaturerfassungseinrichtung (40) zum Erfassen der jeweiligen Temperaturen der Temperatursonden (20a, 20b); und
einer Kalibrierungseinrichtung (100), welcher die erfassten jeweiligen Temperaturen der Temperatursonden (20a, 20b) zuführbar sind, zum Kalibrieren der Infrarot-Kameravorrichtung (50) basierend auf den erfassten jeweiligen Temperaturen der Temperatursonden (20a, 20b);
wobei der Spaltabstand (d) des Spaltes (25) im Bereich 1 mm bis 10 mm, insbesondere 4 mm bis 6 mm liegt; und
wobei der Spaltabstand (d) und die Konturen der Strömungsabschirmplatte (30) derart gewählt sind, dass sich keine Luftströmung oder Gasströmung eines verwendeten Spülgases zwischen dem Sondenwafer (20) und der Strömungsabschirmplatte (30) ausbilden kann.

2. Kalibrierungsanordnung nach Anspruch 1, wobei die Strömungsabschirmplatte (30) durch eine Halterungseinrichtung (35) gehaltert ist, durch welche der Spaltabstand (d) des Spaltes (25) variabel einstellbar ist.

3. Kalibrierungsanordnung nach Anspruch 1, wobei die Strömungsabschirmplatte (30) durch eine Abstandshaltereinrichtung (35'), welche vorzugsweise thermisch isolierend ist, gehaltert ist, welche eine Mehrzahl von Stützelementen (35a, 35b, 35c) aufweist, die sich vom Sondenwafer (20) zur Strömungsabschirmplatte (30) erstrecken.

4. Kalibrierungsanordnung nach Anspruch 4, wobei die Mehrzahl von Stützelementen (35a, 35b, 35c) in den Sondenwafer (20) und/oder in die Strömungsabschirmplatte (30) integriert ist.

5. Kalibrierungsanordnung nach einem der vorhergehenden Ansprüche, wobei die Kalibrierungseinrichtung (100) mit der Temperaturregeleinrichtung (15) verbunden ist und derart gestaltet ist, dass sie basierend auf den erfassten jeweiligen Temperaturen der Temperatursonden (20a, 20b) die Temperaturregeleinrichtung (15) kalibrieren kann.

6. Kalibrierungsanordnung nach einem der vorhergehenden Ansprüche, wobei der Sondenwafer (20) eine schwarze Oberfläche aufweist, insbesondere ein schwarzer Kunststoffwafer oder ein schwarzer Halbleiterwafer ist.

7. Kalibrierungsanordnung nach einem der vorhergehenden Ansprüche, wobei die Strömungsabschirmplatte (30) eine Glasplatte oder eine Halbleiterplatte oder eine Keramikplatte ist.

8. Kalibrierungsanordnung nach einem der vorhergehenden Ansprüche, wobei die Infrarot-Kameravorrichtung (50) eine Speichereinrichtung (50a) aufweist, in der durch die Kalibrierungseinrichtung (100) Kalibrierungswerte basierend auf den erfassten jeweiligen Temperaturen der Temperatursonden (20a, 20b) speicherbar sind.

9. Kalibrierungsanordnung nach einem der vorhergehenden Ansprüche, wobei die Temperatursonden (20a, 20b) in den Sondenwafer (20) integriert sind.

10. Kalibrierungsanordnung nach einem der vorhergehenden Ansprüche, wobei die Temperatursonden (20a, 20b) Pt-Widerstände, insbesondere Pt1000-oder Pt100 Widerstände sind.

11. Kalibrierungsanordnung nach einem der vorhergehenden Ansprüche, wobei die Kalibrierungseinrichtung (100) derart gestaltet ist, dass sie beim Kalibrieren der Infrarot-Kameravorrichtung (50) einen optischen Brechungsindex der Strömungsabschirmplatte (30) berücksichtigt.

12. Kalibrierungsanordnung nach Anspruch 11, wobei der optische Brechungsindex der Strömungsabschirmplatte (30) in die Kalibrierungseinrichtung (100) eingebbar ist.

13. Kalibrierungsanordnung nach einem der vorhergehenden Ansprüche, wobei die Infrarot-Kameravorrichtung (50) ein wesentlich kleineres Abtastraster als die Temperatursonden (20a, 20b) aufweist und die Kalibrierungseinrichtung (100) derart gestaltet ist, dass sie Kalibrierungswerte, die neben den Temperatursonden (20a, 20b) liegen, gemäß einem vorgegebenen Extrapolations- und/oder Interpolationsalgorithmus festlegt.

14. Kalibrierungsverfahren zum Kalibrieren einer Infrarot-Kameravorrichtung (50) zum Erfassen einer Temperatur eines durch eine Temperaturregeleinrichtung (15) beheizbaren Chucks (10) zum Testen von Wafersubstraten mit den Schritten:
Anordnen (S1) von einem Sondenwafer (20) auf dem Chuck (10), wobei der Sondenwafer (20) eine Mehrzahl von Temperatursonden (20a, 20b) aufweist;
Vorsehen der Infrarot-Kameravorrichtung (50), welche auf die Oberseite des Sondenwafers (20) gerichtet ist;
Haltern (S2) einer Strömungsabschirmplatte (30) zwischen dem Sondenwafer (20) und der Infrarot-Kameravorrichtung (50) derart, dass sie durch einen Spalt (25) mit einen Spaltabstand (d) von dem Sondenwafer (20) beabstandet ist und welche für eine vom durch den Chuck (10) beheizten Sondenwafer (20) abgegebenen und von der Infrarot-Kameravorrichtung (50) zu erfassenden Infrarotstrahlung optisch durchlässig ist;
wobei wobei der Spaltabstand (d) des Spaltes (25) im Bereich 1 mm bis 10 mm, insbesondere 4 mm bis 6 mm liegt und der Spaltabstand (d) und die Konturen der Strömungsabschirmplatte (30) derart gewählt werden, dass sich keine Luftströmung oder Gasströmung eines verwendeten Spülgases zwischen dem Sondenwafer (20) und der Strömungsabschirmplatte (30) ausbilden kann;
Erfassen (S3) der jeweiligen Temperaturen der Temperatursonden (20a, 20b); und
Kalibrieren (S4) der Infrarot-Kameravorrichtung (50) basierend auf den erfassten jeweiligen Temperaturen der Temperatursonden (20a, 20b).

15. Kalibrierungsverfahren nach Anspruch 14, wobei basierend auf den erfassten jeweiligen Temperaturen der Temperatursonden (20a, 20b) die Temperaturregeleinrichtung (15) kalibriert wird.

16. Kalibrierungsverfahren nach Anspruch 14 oder 15, wobei beim Kalibrieren der Infrarot-Kameravorrichtung (50) ein optischer Brechungsindex der Strömungsabschirmplatte (30) berücksichtigt wird.

17. Kalibrierungsverfahren nach Anspruch 14, 15 oder 16, wobei die Infrarot-Kameravorrichtung (50) ein wesentlich kleineres Abtastraster als die Temperatursonden (20a, 20b) aufweist und Kalibrierungswerte, die neben den Temperatursonden (20a, 20b) liegen, gemäß einem vorgegebenen Extrapolations- und/oder Interpolationsalgorithmus festlegt werden.

## Claims

1. Calibration assembly for calibrating an infrared camera device (50) for detecting a temperature of a chuck (10) that can be heated by a temperature control device (15) for testing wafer substrates having:
the temperature control device (15);
the chuck (10) that can be heated by the temperature control device (15) for wafer substrates;
a probe wafer (20) which is arranged on the chuck (10) and has a plurality of temperature probes (20a, 20b);
the infrared camera device (50), which is directed towards the upper side of the probe wafer (20);
a flow shield plate (30) held at a distance between the probe wafer (20) and the infrared camera device (50), which is spaced apart from the probe wafer (20) by a gap (25) with a gap distance (d) and which is optically transparent to infrared radiation emitted by the probe wafer (20) heated by the chuck (10) and to be detected by the infrared camera device (50);
a temperature detection device (40) for detecting the respective temperatures of the temperature probes (20a, 20b); and
a calibration device (100), to which can be transmitted the detected respective temperatures of the temperature probes (20a, 20b), for calibrating the infrared camera device (50) based on the detected respective temperatures of the temperature probes (20a, 20b);
wherein the gap distance (d) of the gap (25) is in the range of 1 mm to 10 mm, in particular 4 mm to 6 mm; and
wherein the gap distance (d) and the contours of the flow shield plate (30) are selected in such a manner that no air flow or gas flow of a used purge gas can form between the probe wafer (20) and the flow shield plate (30).

2. Calibration assembly according to claim 1, wherein the flow shield plate (30) is held by a holding device (35), by means of which the gap distance (d) of the gap (25) can be variably adjusted.

3. Calibration assembly according to claim 1, wherein the flow shield plate (30) is held by a spacer device (35'), which is preferably thermally insulating, which has a plurality of support elements (35a, 35b, 35c), which extend from the probe wafer (20) to the flow shield plate (30).

4. Calibration assembly according to claim 4, wherein the plurality of support elements (35a, 35b, 35c) are integrated into the probe wafer (20) and/or into the flow shield plate (30).

5. Calibration assembly according to one of the preceding claims, wherein the calibration device (100) is connected to the temperature control device (15) and designed in such a way that, based on the detected respective temperatures of the temperature probes (20a, 20b), it can calibrate the temperature control device (15).

6. Calibration assembly according to one of the preceding claims, wherein the probe wafer (20) has a black surface, in particular is a black plastic wafer or a black semiconductor wafer.

7. Calibration assembly according to one of the preceding claims, wherein the flow shield plate (30) is a glas plate or a semiconductor plate or a ceramic plate.

8. Calibration assembly according to one of the preceding claims, wherein the infrared camera device (50) has a storage device (50a), in which calibration values based on the detected respective temperatures of the temperature probes (20a, 20b) can be stored by the calibration device (100).

9. Calibration assembly according to one of the preceding claims, wherein the temperature probes (20a, 20b) are integrated into the probe wafer (20).

10. Calibration assembly according to one of the preceding claims, wherein the temperature probes (20a, 20b) are Pt resistances, in particular Pt1000 or Pt100 resistances.

11. Calibration assembly according to one of the preceding claims, wherein the calibration device (100) is designed in such a manner that it takes into account an optical refractive index of the flow shield plate (30) when calibrating the infrared camera device (50).

12. Calibration assembly according to claim 11, wherein the optical refractive index of the flow shield plate (30) can be entered into the calibration device (100).

13. Calibration assembly according to one of the preceding claims, wherein the infrared camera device (50) has a substantially smaller sampling grid than the temperature probes (20a, 20b) and the calibration device (100) is designed in such a manner that it determines calibration values near the temperature probes (20a, 20b) according to a predetermined extrapolation and/or interpolation algorithm.

14. Calibration method for calibrating an infrared camera device (50) for detecting a temperature of a chuck (10) that can be heated by a temperature control device (15) for testing wafer substrates having the steps of:
arranging (S1) a probe wafer (20) on the chuck (10), wherein the probe wafer (20) has a plurality of temperature probes (20a, 20b);
providing the infrared camera device (50), which is directed towards the upper side of the probe wafer (20);
holding (S2) a flow shield plate (30) between the probe wafer (20) and the infrared camera device (50) in such a way that it is spaced apart from the probe wafer (20) by a gap (25) with a gap distance (d) and which is optically transparent to infrared radiation emitted by the probe wafer (20) heated by the chuck (10) and to be detected by the infrared camera device (50);
wherein the gap distance (d) of the gap (25) is in the range of 1 mm to 10 mm, in particular 4 mm to 6 mm and the gap distance (d) and the contours of the flow shield plate (30) are selected in such a manner that no air flow or gas flow of a used purge gas can form between the probe wafer (20) and the flow shield plate (30);
detecting (S3) the respective temperatures of the temperature probes (20a, 20b); and
calibrating (S4) the infrared camera device (50) based on the detected respective temperatures of the temperature probes (20a, 20b).

15. Calibration method according to claim 14, wherein, based on the detected respective temperatures of the temperature probes (20a, 20b), the temperature control device (15) is calibrated.

16. Calibration method according to claim 14 or 15, wherein an optical refractive index of the flow shield plate (30) is taken into account when calibrating the infrared camera device (50).

17. Calibration method according to claim 14, 15 or 16, wherein the infrared camera device (50) has a substantially smaller sampling grid than the temperature probes (20a, 20b) and calibration values near the temperature probes (20a, 20b) are determined according to a predetermined extrapolation and/or interpolation algorithm.

## Revendications

1. Agencement d'étalonnage pour étalonner un dispositif de caméra infrarouge (50) destiné à détecter la température d'un mandrin (10) pouvant être chauffé par un moyen de régulation de température (15) pour tester des substrats de plaquettes, comprenant :
le moyen de régulation de température (15) ;
le mandrin (10) pour substrats de plaquettes pouvant être chauffé par le moyen de régulation de température (15) ;
une plaquette de sondes (20) disposée sur le mandrin (10), qui présente une pluralité de sondes de température (20a, 20b) ;
le dispositif de caméra infrarouge (50) qui est dirigé vers la face supérieure de la plaquette de sondes (20) ;
une plaque de protection contre les courants (30) maintenue à distance entre la plaquette de sondes (20) et le dispositif de caméra infrarouge (50), qui est espacée de la plaquette de sondes (20) par un interstice (25) d'une distance interstitielle (d) par rapport à la plaquette de sondes (20) et qui est optiquement transparente pour un rayonnement infrarouge émis par la plaquette de sondes (20) chauffée par le mandrin (10) et devant être détecté par le dispositif de caméra infrarouge (50) ;
un moyen de détection de température (40) pour détecter les températures respectives des sondes de température (20a, 20b) ; et
un moyen d'étalonnage (100), auquel peuvent être transmises les températures respectives détectées des sondes de température (20a, 20b), pour étalonner le dispositif de caméra infrarouge (50) sur la base des températures respectives détectées des sondes de température (20a, 20b) ;
dans lequel la distance interstitielle (d) de l'interstice (25) est située dans une plage de 1 mm à 10 mm, en particulier de 4 mm à 6 mm ; et
dans lequel la distance interstitielle (d) et les contours de la plaque de protection contre les courants (30) sont choisis de telle sorte qu'aucun courant d'air ou courant de gaz d'un gaz de purge utilisé ne puisse se former entre la plaquette de sondes (20) et la plaque de protection contre les courants (30).

2. Agencement d'étalonnage selon la revendication 1, dans lequel la plaque de protection contre les courants (30) est maintenue par un moyen de maintien (35) qui permet de régler de manière variable la distance interstitielle (d) de l'interstice (25).

3. Agencement d'étalonnage selon la revendication 1, dans lequel la plaque de protection contre les courants (30) est maintenue par un moyen de maintien de distance (35'), de préférence thermiquement isolant, qui présente une pluralité d'éléments de support (35a, 35b, 35c) s'étendant de la plaquette de sondes (20) à la plaque de protection contre les courants (30).

4. Agencement d'étalonnage selon la revendication 4, dans lequel la pluralité d'éléments de support (35a, 35b, 35c) est intégrée dans la plaquette de sondes (20) et/ou dans la plaque de protection contre les courants (30).

5. Agencement d'étalonnage selon l'une des revendications précédentes, dans lequel le moyen d'étalonnage (100) est relié au moyen de régulation de température (15) et est conçu de manière à pouvoir étalonner le moyen de régulation de température (15) sur la base des températures respectives détectées des sondes de température (20a, 20b).

6. Agencement d'étalonnage selon l'une des revendications précédentes, dans lequel la plaquette de sondes (20) présente une surface noire, en particulier est une plaquette en plastique noir ou une plaquette en semi-conducteur noire.

7. Agencement d'étalonnage selon l'une des revendications précédentes, dans lequel la plaque de protection contre les courants (30) est une plaque en verre, une plaque en semi-conducteur ou une plaque en céramique.

8. Agencement d'étalonnage selon l'une des revendications précédentes, dans lequel le dispositif de caméra infrarouge (50) présente un moyen de mémoire (50a) dans lequel des valeurs d'étalonnage basées sur les températures respectives détectées des sondes de température (20a, 20b) peuvent être stockées par le moyen d'étalonnage (100).

9. Agencement d'étalonnage selon l'une des revendications précédentes, dans lequel les sondes de température (20a, 20b) sont intégrées dans la plaquette de sondes (20).

10. Agencement d'étalonnage selon l'une des revendications précédentes, dans lequel les sondes de température (20a, 20b) sont des résistances Pt, en particulier des résistances Pt1000 ou Pt100.

11. Agencement d'étalonnage selon l'une des revendications précédentes, dans lequel le moyen d'étalonnage (100) est conçu de manière à tenir compte d'un indice de réfraction optique de la plaque de protection contre les courants (30) lors de l'étalonnage du dispositif de caméra infrarouge (50).

12. Agencement d'étalonnage selon la revendication 11, dans lequel l'indice de réfraction optique de la plaque de protection contre les courants (30) peut être entré dans le moyen d'étalonnage (100).

13. Agencement d'étalonnage selon l'une des revendications précédentes, dans lequel le dispositif de caméra infrarouge (50) présente une trame de balayage sensiblement plus petite que les sondes de température (20a, 20b) et le moyen d'étalonnage (100) est conçu de manière à déterminer les valeurs d'étalonnage qui se situent à côté des sondes de température (20a, 20b) selon un algorithme d'extrapolation et/ou d'interpolation prédéfini.

14. Procédé d'étalonnage pour étalonner un dispositif de caméra infrarouge (50) destiné à détecter la température d'un mandrin (10) pouvant être chauffé par un moyen de régulation de température (15) pour tester des substrats de plaquettes, comprenant les étapes consistant à :
disposer (S1) une plaquette de sondes (20) sur le mandrin (10), la plaquette de sondes (20) présentant une pluralité de sondes de température (20a, 20b) ;
prévoir le dispositif de caméra infrarouge (50) qui est dirigé vers la face supérieure de la plaquette de sondes (20) ;
maintenir (S2) une plaque de protection contre les courants (30) entre la plaquette de sondes (20) et le dispositif de caméra infrarouge (50) de telle sorte qu'elle soit espacée par un interstice (25) d'une distance d'interstice (d) par rapport à la plaquette de sondes (20) et qui est optiquement transparente pour un rayonnement infrarouge émis par la plaquette de sondes (20) chauffée par le mandrin (10) et devant être détecté par le dispositif de caméra infrarouge (50) ;
dans lequel la distance interstitielle (d) de l'interstice (25) est située dans une plage de 1 mm à 10 mm, en particulier de 4 mm à 6 mm, et la distance interstitielle (d) et les contours de la plaque de protection contre les courants (30) sont choisis de telle sorte qu'aucun courant d'air ou courant de gaz d'un gaz de purge utilisé ne puisse se former entre la plaquette de sondes (20) et la plaque de protection contre les courants (30) ;
détecter (S3) les températures respectives des sondes de température (20a, 20b) ; et
étalonner (S4) le dispositif de caméra infrarouge (50) sur la base des températures respectives détectées des sondes de température (20a, 20b).

15. Procédé d'étalonnage selon la revendication 14, dans lequel le moyen de régulation de température (15) est étalonné sur la base des températures respectives détectées des sondes de température (20a, 20b).

16. Procédé d'étalonnage selon la revendication 14 ou 15, dans lequel un indice de réfraction optique de la plaque de protection contre les courants (30) est pris en compte lors de l'étalonnage du dispositif de caméra infrarouge (50).

17. Procédé d'étalonnage selon la revendication 14, 15 ou 16, dans lequel le dispositif de caméra infrarouge (50) présente une trame de balayage sensiblement plus petite que les sondes de température (20a, 20b) et les valeurs d'étalonnage qui se situent à côté des sondes de température (20a, 20b) sont déterminées selon un algorithme d'extrapolation et/ou d'interpolation prédéfini.
